# EUROPÄISCHE PATENTSCHRIFT

(11) **EP 4 111 118 B1**
(45) Veröffentlichungstag und Bekanntmachung des Hinweises auf die Patenterteilung: **03.01.2024**
(21) Anmeldenummer: 21705954.2
(22) Anmeldetag: 18.02.2021
(51) Int. Cl.: F27B 1/24, F27D 17/00, F27D 19/00, F27D 99/00

(54) **VORRICHTUNG UND VERFAHREN ZUM BRENNEN UND/ODER KALZINIEREN VON STÜCKIGEM GUT**
DEVICE AND METHOD FOR FIRING AND/OR CALCINING LUMPY GOODS
DISPOSITIF ET PROCÉDÉ DE CUISSON ET/OU DE CALCINATION DE PRODUITS GRUMELEUX

(30) Priorität: 25.02.2020 DE 102020202410; 25.02.2020 BE 202005122
(43) Veröffentlichungstag der Anmeldung: 04.01.2023
(73) Patentinhaber: Maerz Ofenbau AG, 8002 Zürich (CH); thyssenkrupp AG, 45143 Essen (DE)
(72) Erfinder: PIRINGER, Hannes, 5712 Beinwil am See (CH)
(74) Vertreter: thyssenkrupp Intellectual Property GmbH
(86) Internationale Anmeldenummer: PCT/EP2021/053985
(87) Internationale Veröffentlichungsnummer: WO 2021/170478

(56) Entgegenhaltungen:
- EP-A1- 2 230 223
- DE-A1- 3 119 198
- DE-B3-102010 060 866

## Beschreibung

Die Erfindung betrifft eine Vorrichtung und Verfahren zum Brennen und/oder Kalzinieren von stückigem Gut, insbesondere von Kalkstein oder anderen Karbonaten, mit einem Schachtofen, der wenigstens eine Brennzone und eine Kühlzone aufweist.

Aus der CH 378 217 A ist ein Schachtofen zum kontinuierlichen Brennen von mineralischen Werkstoffen mit einer Brennzone und einer Kühlzone bekannt, wobei die Heißgase der Brennzone und die Brenngutkühlluft über einen im Übergangsbereich zwischen Brenn- und Kühlzone ausgebildeten Absaugraum abgeführt werden.

Aus der DE 10 2010 060 866 B3 ist ein Kalkofen bekannt, der eine Brennzone aufweist, die mit ihrem unteren Ende in die Kühlzone des Schachtes hineinragt. Mit dieser Bauweise ist lediglich eine maximale Durchsatzleistung von 250t/d möglich. In der Kalkindustrie werden derzeit allerdings Kalkschachtöfen mit einer Durchsatzleistung von etwa 400 bis 600t/d gefordert. Des Weiteren ist Kalk mit einer hohen Reaktivität gewünscht, wobei gleichzeitig das entstehende Abgas eine hohe CO2-Konzentration aufweisen soll, um eine anschließende Sequestierung zu ermöglichen. Die WO 02/33338 A2 beschreibt ein weiteres Verfahren zur Erzeugung von gebranntem Gut in einem Ringschachtofen.

Es ist daher die Aufgabe der vorliegenden Erfindung, einen Schachtofen und ein Verfahren zum Brennen und/oder Kalzinieren von stückigem Gut anzugeben, das die Herstellung von Kalk mit einer hohen Reaktivität bei gleichzeitiger CO2 Abscheidung ermöglicht.

Diese Aufgabe wird erfindungsgemäß durch ein Verfahren mit den Merkmalen des unabhängigen Verfahrensanspruchs 1 und durch eine Vorrichtung mit den Merkmalen des unabhängigen Vorrichtungsanspruchs 7 gelöst. Vorteilhafte Weiterbildungen ergeben sich aus den abhängigen Ansprüchen.

Ein Verfahren zum Brennen von insbesondere karbonathaltigem Material in einem Schachtofen mit einem Schacht umfasst nach einem Aspekt, dass das Material durch einen Materialeinlass in eine Vorwärmzone zum Vorwärmen des Materials, eine Brennzone zum Brennen des Materials und eine Kühlzone zum Kühlen des gebrannten Materials zu einem Materialauslass strömt, wobei Kühlluft in die Kühlzone eingelassen wird und das Abgas über einen Abgasauslass aus dem Schacht ausgelassen wird. Kühlluft wird über eine Kühlgasabzugseinrichtung aus dem Schacht ausgelassen, wobei sich die Kühlgasabzugseinrichtung von der Kühlzone in die Brennzone und von der Brennzone aus dem Schacht heraus erstreckt. Das über den Abgasauslass aus dem Schacht ausgelassene Abgas zumindest teilweise in die Brennzone geleitet wird.

Bei dem zu brennenden Material handelt es sich beispielsweise um körniges Material, insbesondere Kalkstein, mit einer für Korngröße von10 bis 150mm, vorzugsweise 30 bis 100mm, insbesondere 40 bis 80 mm. Das Abgas weist vorzugsweise einen CO₂-Anteil von mindestens 30% bis mindestens 90% auf, vorzugsweise mindestens 35% bis mindestens 45% auf, vorzugsweise bezogen auf trockenes Gas.

Der Materialeinass ist insbesondere an dem oberen Ende des Schachtes angeordnet. In Strömungsrichtung des Materials vor der Brennzone ist die Vorwärmzone zum Vorwärmen des Materials angeordnet. Die Vorwärmzone schließt sich vorzugsweise direkt an einen Materialeinlass des Materials in den Schachtofen an und dient der Vorwärmung des Materials auf eine Temperatur von etwa 600°C bis 800°C. Die Brennzone schließt sich vorzugsweise direkt an die Vorwärmzone an und dient dem Brennen des Materials, wobei dieses vorzugsweise auf eine Temperatur von etwa 900°C bis 1800°C erhitzt wird. Die Kühlzone schließt sich vorzugsweise direkt an die Brennzone an und dient der Kühlung des gebrannten Materials auf eine Temperatur von beispielsweise 100 °C. Der Materialauslass ist beispielsweise in einem sich an die Kühlzone anschließenden Auslasstrichter angeordnet, wobei der Materialauslass beispielsweise einen Drehteller oder Schubtische aufweist zum Austragen von Material aus der Kühlzone in den Auslasstrichter. Die Kühlluft wird vorzugsweise über einen Kühllufteinlass in die Kühlzone des Schachtofens einblasen. Der Kühllufteinlass ist vorzugsweise in der Schachtwand der Kühlzone angeordnet.

In der Brennzone des Schachts sind vorzugsweise eine Mehrzahl von Brennern, insbesondere Brennerlanzen, angeordnet. Insbesondere weist der Schacht in der Brennzone eine oder mehrere Brennkammerebenen auf, in denen Brennkammern, vorzugsweise umfangsmäßig um die Brennzone und die Kühlgasabzugseinrichtung herum angeordnet sind. In jeder Brennkammer ist vorzugsweise ein Brenner angeordnet. Es ist ebenfalls denkbar, dass der Schacht keine Brennkammer sondern eine Mehrzahl von Seitenbrennern aufweist, die sich durch die Schachtwand in die Brennzone erstrecken. Die Seitenbrenner und/ oder die Brenner in den Brennkammern sind vorzugsweise als Brennerlanzen und insbesondere rohrförmig ausgebildet. Sie dienen dem Leiten von Brennstoff und vorzugsweise einem Oxidationsmittel in die Brennzone. Beispielsweise weist der Schacht in der Brennzone eine Mehrzahl von Brennkammern und Seitenbrennern auf.

Der Abgasauslass ist vorzugsweise ein dem oberen Bereich des Schachts, insbesondere in der Vorwärmzone oder in dem oberen Bereich der Brennzone angeordnet

Der Einlass der Kühlgasabzugseinrichtung zum Einlassen von Kühlluft in die Kühlgasabzugseinrichtung ist vorzugsweise vollständig innerhalb der Kühlzone angeordnet. Insbesondere ist der Einlass unterhalb der Brennstoffleitungen, insbesondere der Mündungen der Brennkammern und/ oder der Brennerlanzen in die Brennzone, angeordnet. Die Kühlgasabzugseinrichtung ist vorzugsweise zumindest teilweise unterhalb des Abgasauslasss angeordnet. Der Gasauslass der Kühlgasabzugseinrichtung zum Auslassen des Gases in eine außerhalb des Schachtes angeordnet Kühlgasabzugsleitung ist vorzugsweise innerhalb der Brennzone oder der Vorwärmzone angeordnet. Über die Kühlluftabzugsleitung wird vorzugsweise Kühlluft zusammen mit Abgas aus der Brennzone aus dem Schacht geleitet.

Durch die spezielle Ausbildung und Anordnung der Kühlgasabzugseinrichtung, wird eine einfache Beeinflussung des Kühlgasabzugs ermöglicht. Die Atmosphäre in der Brennzone wird von der Atmosphäre in der Kühlzone im Wesentlichen nur durch das im untersten Teil der Brennzone befindliche Material getrennt. Das mit Überdruck in die Brennzone eingeführte Kühlgas nimmt grundsätzlich den Weg des geringsten Widerstandes. Durch das beispielsweise in der Kühlgasabzugsleitung angeordnete und als eine Klappe oder Ventil geregelte Regelorgan lässt sich die Menge an abzuziehendem Gas sehr einfach steuern, sodass beispielsweise das gesamte Kühlgas über die Kühlgasabzugseinrichtung abgezogen wird und nicht über die Materialschüttung in die Brennzone gelangt. Selbstverständlich ist es durch eine geeignete Stellung des Regelorgans auch möglich, dass lediglich eine Teilmenge des Kühlgases über die Kühlgasabzugseinrichtung abgezogen und der Rest der Kühlzone zugeführt wird. Schließlich ist es grundsätzlich auch denkbar, dass das Regelorgan so weit geöffnet wird, dass ein Teil des Abgases aus der Brennzone durch die Materialschüttung in die Kühlzone und von dort über die Kühlgasabzugseinrichtung abgezogen wird.

Die Rückführung des über den Abgasauslass aus dem Schacht ausgelassene Abgas zumindest teilweise in die Brennzone ermöglicht eine Erwärmung der Atmosphäre in der Brennzone mittels des abgezogenen CO2-haltigem Abgases. Somit wird vorzugsweise reines CO2 in die Brennzone eingeführt und sichergestellt, dass das Abgas einen sehr hohen Anteil an CO2 von beispielsweise mehr als 90% aufweist. Vorzugweise wird lediglich ein Teil des Abgases, beispielsweise etwa 20% bis 50%, der Brennzone wieder zugeführt, wobei der übrige Teil des Abgases aus dem Schachtofen abgeführt und beispielsweise für eine anschließenden Sequestierung gespeichert wird.

Gemäß einer ersten Ausführungsform wird das Abgas vor dem Einleiten in die Brennzone einem Wärmetauscher zugeführt. Bei dem Wärmetauscher handelt es sich beispielsweise um einen Wärmetauscher mit Wasserkühlung. Das Abgas wird beispielweise vor dem Einleiten in die Brennzone einem ersten und einem zweiten Wärmetauscher zugeführt, wobei der erste Wärmetauscher der Abkühlung des Abgases mittels Kühlwasser dient und der zweite Wärmetausche der Erwärmung des Abgases mittels des über die Kühlgasabzugseinrichtung abgeführten Gases dient. Das Abgas wird vorzugsweise zusätzlich mittels eines Filters entstaubt. Im Anschluss an den ersten Wärmetauscher wird das Abgas vorzugsweise zumindest teilweise abgeführt und vorzugsweise zur weiteren Verarbeitung gespeichert. Das Abgas wird vor dem Einleiten in die Brennzone beispielsweise lediglich genau einem Wärmetauscher zugeführt, wobei es sich beispielsweise um den Wärmetauscher zur Erwärmung des Abgases mittels des über die Kühlgasabzugseinrichtung abgeführten Gases handelt. Die Abgasauslassleitung weist vorzugsweise in Strömungsrichtung des Abgases vor dem Wärmetauscher, insbesondere dem Wärmetauscher zur Erwärmung des Abgases mittels des über die Kühlgasabzugseinrichtung abgeführten Gases, einen Ventilator, insbesondere einen Hochdruckventilator, einen Drehkolbenverdichter und/oder einen Schraubenverdichter auf.

Ein mittels Wasserkühlung betriebener Wärmetauscher ist beispielsweise ausschließlich in einem von der Abgasauslasssleitung abgezweigten Strang zur Abführung des Abgases aus dem System angeordnet.

Die Kühlgasabzugseinrichtung ist vorzugsweise mit einer Kühlluftabzugsleitung zum Leiten des aus dem Schacht abgeführten Gases verbunden und wobei die Kühlluftabzugsleitung in Strömungsrichtung des Gases einen Wärmetauscher, vorzugsweise dem voran beschriebenen zweiten Wärmetauscher, einen Filter zum Entstauben der Kühlabluft und/oder ein Regelorgan aufweist. Der Wärmetauscher wird vorzugsweise mit dem Abgas aus der Abgasauslasssleitung betrieben. Des Weiteren wird beispielsweise ein Kühlgas, wie Luft, in die Kühlluftabzugsleitung geleitet. Es ist ebenfalls denkbar, die Kühlabluft nicht durch einen Wärmetauscher zu leiten, sondern beispielsweise zur Erzeugung von Strom, Trocknung von Mahlgut oder zu Heizzwecken zu verwenden.

Gemäß einer weiteren Ausführungsform wird innerhalb der Brennzone eine Gleichstrombrennzone ausgebildet. Innerhalb der Gleichstrombrennzone strömt das Gas vorzugsweise in gleicher Richtung zu der Materialströmung durch die Brennzone des Schachts. Zusätzlich zu der Gleichstrombrennzone wird innerhalb der Brennzone vorzugsweise eine Gegenstrombrennzone ausgebildet. In der Gegenstrombrennzone strömt das Material vorzugsweise entgegen der Gasströmung durch den Schacht. Die Gegenstrombrennzone bildet sich insbesondere oberhalb der Gleichstrombrennzone und vorzugsweise oberhalb der Brenner der Brennzone aus.

Gemäß einer weiteren Ausführungsform wird innerhalb des Schachtofens ein Überdruck eingestellt. Der Überdruck beträgt beispielsweise etwa 300 mbar. Zur Erzeugung des Überdrucks wird vorzugsweise Kühlgas und ein Oxidationsmittel, wie Verbrennungsluft, über einen oder mehrere Ventilatoren in den Schachtofen eingeblasen.

Gemäß einer weiteren Ausführungsform wird ein Oxidationsmittel, insbesondere sauerstoffreiches Gas, in die Brennzone geleitet. Bei dem Oxidationsmittel handelt es sich beispielsweise um reinen Sauerstoff, Luft, mit Sauerstoff angereicherte Luft oder ein Gas mit einem Sauerstoffanteil von mindestens 90%. Das Oxidationsmittel wird vorzugsweise über eine Oxidationsmittelleitung in die Brennzone geleitet. Die Oxidationsmittelleitung ist vorzugsweise zumindest teilweise als Ringleitung um den Schacht herum ausgebildet. Insbesondere ist die Oxidationsmittelleitung eine Oxidationsmittellanze, die sich in die Brennzone des Schachtofens erstreckt und einen Auslass zum Auslassen von Oxidationsmittel in die Brennzone aufweist. Vorzugsweise ist die Oxidationsmittellanze an der Brennerlanze oder direkt unterhalb der Brennerlanze angebracht. Es ist ebenfalls denkbar, dass die Oxidationsmittellanze durch die Brennerlanze verläuft. Vorzugsweise ist die Brennerlanze so ausgeführt, dass Oxidationsmittel zusammen mit Verbrennungsluft und Brennstoff durch die Brennerlanze strömt.

Das Oxidationsmittel wird gemäß einer weiteren Ausführungsform vor dem Eintreten in die Brennzone mit dem Abgas gemischt. Vorzugsweise weist der Schachtofen einen Gasmischer auf, in den das Oxidationsmittel und das Abgas vorzugsweise geregelt geleitet werden.

Die Erfindung umfasst des Weiteren einen Schachtofen zum Brennen von insbesondere karbonathaltigem Material mit einem Schacht aufweisend in Strömungsrichtung des Materials einen Materialeinlass, eine Vorwärmzone zum Vorwärmen des Materials, eine Brennzone zum Brennen des Materials mit zumindest einer Brennstoffleitung zum Einlassen von Brennstoff in die Brennzone, eine Kühlzone mit einem Kühllufteinlass zum Kühlen des gebrannten Materials, und einen Materialauslass zum Auslassen des Materials aus dem Schachtofen, wobei der Schachtofen einen Abgasauslass zum Auslassen von Abgas aus dem Schacht aufweist. Der Schachtofen weist eine Kühlgasabzugseinrichtung zum Auslassen von Kühlluft aus dem Schacht auf, die sich von der Kühlzone in die Brennzone und von der Brennzone aus dem Schacht heraus erstreckt. Der Abgasauslass ist zur Rückführung des Abgases mit der Brennzone verbunden.

Die vorangehend mit Bezug auf das Verfahren beschriebenen Vorteile und Ausführungen treffen in vorrichtungsgemäßer Entsprechung auch auf den Schachtofen zu.

Die Kühlgasabzugseinrichtung erstreckt sich vorzugsweise mittig durch die Brennzone. Dies ermöglicht ein gleichmäßiges Brennen des in der Brennzone vorhandenen Materials, ohne dass die Kühlgasabzugseinrichtung den Brennvorgang negativ beeinflusst. Vorzugsweis erstreckt sich die Kühlgasabzugseinrichtung über die gesamte Länge der Brennzone. Bei der Kühlgasabzugseinrichtung handelt es sich beispielsweise um ein Rohr oder einen Schacht mit einem insbesondere kreisförmigen oder eckigen Querschnitt.

Die Brennzone ist vorzugsweise zumindest teilweise kreisringförmig ausgebildet und konzentrisch mit der Kühlgasabzugseinrichtung angeordnet. Die Breite des Kreisrings beträgt beispielsweise etwa 0,5m bis 2m, vorzugsweise 1m. Beispielsweise ist die Brennzone vollständig oder teilweise als Hohlzylinder ausgebildet, wobei das Innere des Hohlzylinders durch die Kühlgasabzugseinrichtung gebildet wird. Vorzugsweise ist die Kühlgasabzugseinrichtung abgeschlossen, sodass die Kühlgasabzugseinrichtung im Betrieb des Schachtofens einen materialfreien Raum ausbildet.

Die Kühlgasabzugseinrichtung ist vorzugsweise mit einem Regelorgan zur Regelung der Menge an Gas, das durch die Kühlgasabzugseinrichtung strömt, verbunden. Bei dem Regelorgan handelt es sich beispielsweise um ein Ventil oder eine Klappe. Dies ermöglicht eine gezielte Abfuhr einer bestimmten Menge an Kühlabluft durch die Kühlgasabzugseinrichtung, wobei beispielsweise die Kühlluft vollständig oder teilweise aus der Kühlzone abgezogen werden kann. Bei einem Teilabzug der Kühlluft aus der Kühlzone durch die Kühlgasabzugseinrichtung strömt der übrige Teil der Kühlluft in die Brennzone und wird über die Abgasauslasssleitung aus dem Schacht abgeführt.

Das Regelorgan ist vorzugsweise mit einem Sensor verbunden, der zur Ermittlung der Druckdifferenz zwischen der Brennzone und der Kühlgasabzugseinrichtung ausgebildet und eingerichtet ist. Der Schachtofen weist vorzugsweise einen weiteren Sensor zur Ermittlung des Sauerstoffgehalts und/ oder des CO2 Gehalts in der Abgasauslasssleitung und/ oder der Kühlgasabzugsleitung auf.

Das Regelorgan ist insbesondere über eine Steuereinrichtung mit dem Sensor zur Ermittlung der Druckdifferenz und/oder dem Sauerstoffgehalt und/ oder dem CO2 Gehalt verbunden. Die Steuereinrichtung ist derart ausgebildet, dass sie das Regelorgan in Abhängigkeit der ermittelten oder gewünschten Druckdifferenz, des Sauerstoffgehalts und/ oder des CO2 Gehalts steuert. Vorzugsweise ist das Regelorgan von einer geöffneten Stellung, in der die Kühlgasabzugsleitung durch das Regelorgan kaum oder gar nicht verengt wird, in eine geschlossene Stellung, in der kein Gas durch die Kühlgasabzugsleitung strömbar ist, bewegbar. Die Steuereinrichtung steuert die Bewegung des Regelorgans vorzugsweise stufenlos zwischen der geschlossenen und der geöffneten Stellung. Die Sensoren sind vorzugsweise mit der Steuereinrichtung derart verbunden, dass die ermittelte Druckdifferenz, Sauerstoffgehalt und CO2 Gehalt an die Steuerungseinrichtung übertragen werden.

Gemäß einer Ausführungsform ist in der Brennzone zumindest eine Brennkammerebene ausgebildet, in der zumindest eine Brennkammer mit einem Brenner angeordnet ist und wobei in der Brennzone zumindest ein zusätzlicher Brenner, vorzugsweise ein Seitenbrenner, wie eine Brennerlanze, angeordnet ist.

In der Brennzone des Schachts sind vorzugsweise mehrere, insbesondere zwei, Brennkammerebenen ausgebildet, wobei in jeder Brennkammerebene zumindest eine Brennkammer angeordnet ist. Vorzugsweise ist in jeder Brennkammer der Brennkammerebenen ein Brenner angebracht. Der Brenner ist beispielsweise eine Brennerlanze, die sich im Wesentlichen horizontal in die Brennkammer erstreckt. Vorzugsweise sind in der Brennkammerebene zwischen zwei benachbarten Brennkammern jeweils zumindest ein zusätzlicher Brenner, insbesondere in als Brennerlanze ausgeführter Seitenbrenner, angebracht. Die zusätzlichen Brenner sind beispielsweise innerhalb der Schachtwand verschiebbar angebracht, sodass die Einstecktiefe variiert werden kann. Die zusätzlichen Brenner sind vorzugsweise vollständig außerhalb der Brennkammern innerhalb der Brennzone angebracht. Die Brennzone weist beispielsweise keine Brennkammern sondern ausschließlich vorzugsweise als Brennerlanzen ausgebildete Seitenbrenner auf. Die Brennzone weist vorzugsweise eine oder mehr, insbesondere zwei, Brennerebenen auf, in denen jeweils eine Mehrzahl von Seitenbrennern, insbesondere Brennerlanzen, beispielsweise unterschiedlicher Einstecktiefen angeordnet sind. Die Brennerlanzen sind vorzugsweise an der Innenwand der Brennzone angebracht und gleichmäßig zueinander beabstandet angeordnet. Insbesondere sind die Brennerlanzen an dem unteren Endbereich der Brennzone angeordnet.

Insbesondere ist die Abgasauslasssleitung mit der Oxidationsmittelleitung verbunden, sodass das Abgas zusammen mit dem Oxidationsmittel in die Brennzone eingeführt wird. Die Brennstoffleitung ist beispielsweise mit einer Mehrzahl von Brennern, insbesondere Brennerlanzen verbunden, die sich in die Brennzone erstrecken und wobei die Brennerlanzen auf zumindest zwei unterschiedlichen Höhenniveaus innerhalb der Brennzone angeordnet sind.

Gemäß einer weiteren Ausführungsform ist zwischen dem Abgasauslass und der Brennzone, insbesondere der Oxidationsmittelleitung, ein Wärmetauscher angeordnet. Beispielsweise ist stromabwärts des Abgasauslasses ein erster Wärmetauscher zum Kühlen des Abgases beispielsweise mit Wasser und ein zweiter Wärmetauscher zum Erwärmen des Abgases mit dem über die Kühlgasabzugseinrichtung abgezogenen Gas vorzugsweise im Gegenstrom angeordnet. Zusätzlich ist stromabwärts des Abgasauslasses beispielsweise ein Filter, insbesondere zwischen den Wärmetauschern, zum Entstauben des Abgases angeordnet. Innerhalb der Brennzone ist gemäß einer weiteren Ausführungsform eine Gleichstrombrennzone und vorzugsweise eine Gegenstrombrennzone ausgebildet.

Gemäß einer weitere Ausführungsform ist der Kühllufteinlass mit einem Verdichter zur Erzeugung eines Überdrucks in dem Schachtofen verbunden. Der Materialeinlass und/ oder der Materialauslass weisen gemäß einer weiteren Ausführungsform jeweils eine Schleuse zum Einlassen und/ oder Auslassen von Material in den Schachtofen auf. Eine Schleuse oder ein als Schleuse ausgebildeter Materialeinlass ist vorzugsweise derart ausgestaltet, dass lediglich das zu brennende Rohmaterial in den Schacht gelangt, nicht aber die Umgebungsluft. Vorzugsweise ist die Schleuse derart ausgebildet, dass sie den Schacht luftdicht gegen die Umgebung abdichtet und einen Eintritt von Feststoffen, wie das zu brennende Gut, in den Schacht erlaubt.

Gemäß einer weiteren Ausführungsform weist der Schachtofen eine Oxidationsmittelleitung zur Leitung von Oxidationsmittel, insbesondere sauerstoffreichem Gas, in die Brennzone auf. Die Oxidationsmittelleitung ist vorzugsweise als Ringleitung, die sich außen um den Schacht herum erstreckt, ausgebildet.

Gemäß einer weiteren Ausführungsform ist der Abgasauslass mit der Oxidationsmittelleitung zur Leitung des Abgases über die Oxidationsmittelleitung in die Brennzone verbunden ist. Der Schachtofen weist vorzugsweise einen Gasmischer auf, der mit der Oxidationsmittelleitung und dem Abgasauslass verbunden ist, sodass das Abgas mit dem Oxidationsmittel in dem Gasmischer vermischt wird.

Gemäß einer weiteren Ausführungsform weist die Kühlgasabzugseinrichtung eine Mehrzahl von Gasauslässen zum Auslassen des aus dem Schacht abgezogenen Gases aus dem Schacht auf. Beispielsweise ist die Kühlgasabzugseinrichtung mit vier, insbesondere einem bis zehn Gasauslässen verbunden. Die Gasauslässe sind vorzugsweise sternförmig zueinander um die Kühlgasabzugseinrichtung herum angeordnet und insbesondere gleichmäßig zueinander beabstandet. Vorzugsweise ist jeder Gasauslass mit einem jeweiligen Wärmetauscher zum Kühlen des über die Kühlgasabzugseinrichtung abgezogenen Gases im Gegenstrom mit dem Abgas verbunden. Gemäß einer weiteren Ausführungsform entspricht die Anzahl der Wärmetauscher stromabwärts der Kühlgasabzugseinrichtung der Anzahl der Gasauslässe.

Gemäß einer weiteren Ausführungsform ist in der Brennzone zumindest eine Brennkammerebene ausgebildet, in der zumindest eine Brennkammer mit einem Brenner angeordnet ist und wobei in der Brennzone zumindest ein zusätzlicher Brenner, vorzugsweise ein Seitenbrenner, angeordnet ist.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung eines Schachtofens zum Brennen und/oder Kalzinieren von stückigem Gut, in einem Längsschnitt gemäß einem Ausführungsbeispiel.
- Fig. 2 bis 5: zeigt eine schematische Darstellung einer Brennkammerebene eines Schachtofens der Fig. 1 in einem Querschnitt gemäß jeweils einem Ausführungsbeispiel.
- Fig. 6: zeigt eine schematische Darstellung eines Schachtofens zum Brennen und/oder Kalzinieren von stückigem Gut, in einem Längsschnitt gemäß einem weiteren Ausführungsbeispiel.
- Fig. 7 bis 8: zeigt eine schematische Darstellung einer Brennkammerebene eines Schachtofens der Fig. 6 in einem Querschnitt gemäß jeweils einem weiteren Ausführungsbeispiel.
- Fig. 9: zeigt eine schematische Darstellung eines Schachtofens zum Brennen und/oder Kalzinieren von stückigem Gut, in einem Längsschnitt gemäß einem weiteren Ausführungsbeispiel.
- Fig. 10 bis 13: zeigt eine schematische Darstellung einer Brennkammerebene eines Schachtofens der Fig. 9 in einem Querschnitt gemäß jeweils einem weiteren Ausführungsbeispiel.
- Fig. 14: zeigt eine schematische Darstellung eines Schachtofens zum Brennen und/oder Kalzinieren von stückigem Gut, in einem Längsschnitt gemäß einem weiteren Ausführungsbeispiel.

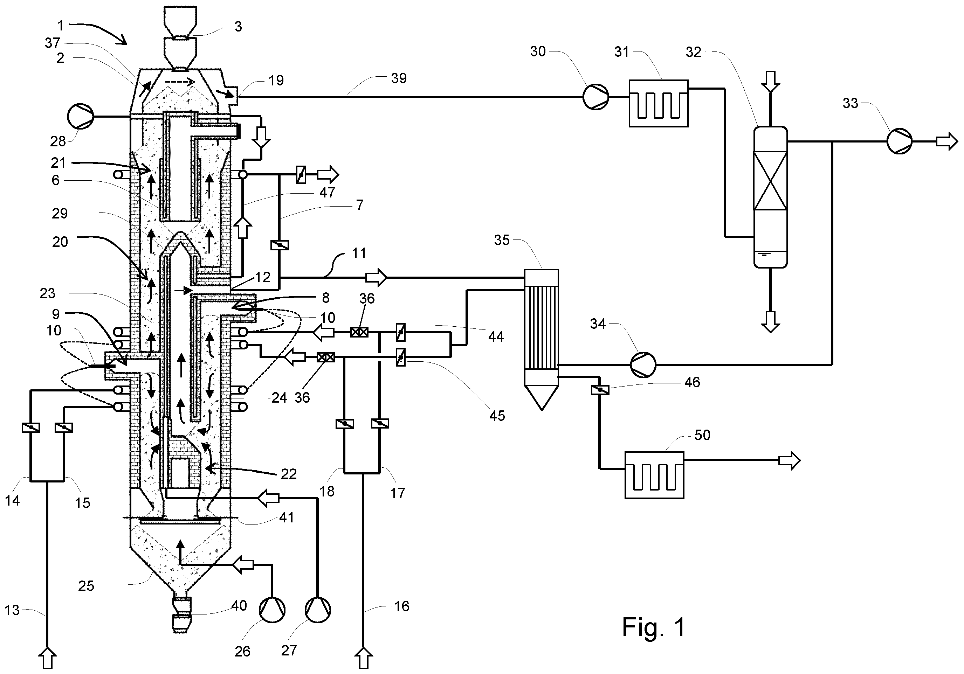

In Fig. 1 ist ein Schachtofen 1, insbesondere ein Ringschachtofen, zum Brennen von körnigem Material gezeigt, wobei der Schachtofen 1 einen Schacht 2 umfasst, der sich vorzugsweise in vertikaler Richtung erstreckt und beispielsweise einen im Wesentlichen konstanten Querschnitt aufweist. Beispielsweise weist der Schacht 2 einen runden, insbesondere kreisförmigen, oder eckigen, insbesondere viereckigen Querschnitt auf. Der Schacht 2 ist von einer Schachtwand umgeben, die beispielsweise aus Stahl mit einer sich daran anschließenden gemauerten, feuerfesten Innenwand ausgebildet ist. Der Schacht 2 weist an seinem oberen Ende einen Materialeinlass 3 auf, der beispielsweise als obere Öffnung des Schachts 2 und insbesondere als Schleuse 3 ausgebildet ist und sich vorzugsweise über den gesamten oder einen Teil des Querschnitts des Schachts 2 erstreckt. Der Materialeinlass 3 dient dem Einlassen von zu brennenden Material in den Schachtofen 1. Ein als Schleuse 3 ausgebildeter Materialeinlass ist vorzugsweise derart ausgestaltet, dass lediglich das zu brennende Rohmaterial in den Schacht 2 gelangt, nicht aber die Umgebungsluft. Vorzugsweise ist die Schleuse 3 derart ausgebildet, dass sie den Schacht 2 luftdicht gegen die Umgebung abdichtet und einen Eintritt von Feststoffen, wie das zu brennende Gut, in den Schacht erlaubt.

Der Schacht 2 weist in einem oberen Bereich einen Abgasauslass 19 zum Abführen von Ofenabgas aus dem Schacht 2 auf. Das Abgas wird aus dem Abgasauslass 19 in eine Abgasauslasssleitung 39 geführt. Beispielhaft erfolgt der Abzug des Abgases über einen materialfreien Ringspalt 37. Innerhalb des Schachts 2 wird das zu brennende Material schwerkraftbedingt von oben nach unten durch den Schacht 2 gefördert, wobei der Schacht 2 in Förderrichtung des Materials eine Vorwärmzone 21 zum Vorwärmen des Materials, eine Brennzone 20 zum Brennen des Materials und eine Kühlzone 22 zum Kühlen des gebrannten Materials aufweist. Die Vorwärmzone 21 erstreckt sich vorzugsweise von dem Materialeinlass 3 zu der Brennzone 20 und dient der Vorwärmung des Materials vor dem Brennen. In der Brennzone 20 findet im Unterschied zur Vorwärmzone 21 ein Brennen, insbesondere Kalzinieren, vorzugsweise durch eine Entsäuerung, des Materials statt.

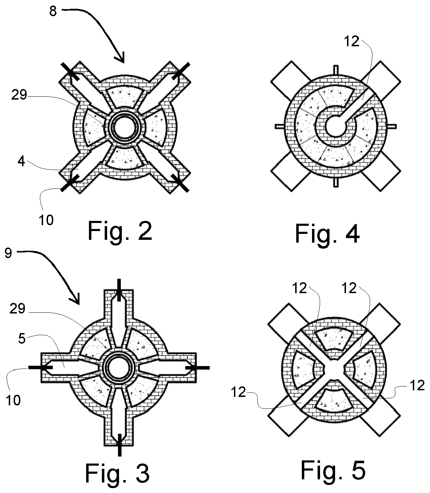

In der Brennzone 20 des Schachts 2 sind vorzugsweise Brennkammerebenen 8, 9 ausgebildet, wobei in jeder Brennkammerebene 8, 9 zumindest eine Brennkammer 4, 5 angeordnet ist. In Fig. 1 sind beispielhaft zwei Brennkammerebenen 8, 9 in dem Schacht 2 angeordnet. Es ist ebenfalls denkbar, dass leidglich eine Brennkammerebene 8, 9 oder mehr als zwei Brennkammerebenen vorhanden sind. Die Brennkammerebenen 8, 9 sind im Detail mit Bezug auf die Fig. 2 und 3 beschrieben. Beispielhaft ist in jeder Brennkammer 4, 5 der Brennkammerebenen 8, 9 ein Brenner 10 angebracht. Der Brenner 10 ist beispielsweise eine Brennerlanze, die sich im Wesentlichen horizontal in die Brennkammer 4, 5 erstreckt.

Der Schachtofen 1 weist des Weiteren eine Brennstoffleitung 13 zum Einführen von Brennstoff und eine Oxidationsmittelzuleitung 16 zum Einführen eines Oxidationsmittels in die Brennzone 20 des Schachts 2 auf. Die Brennstoffleitung 13 zweigt sich beispielhaft in zwei Brennstoffringleitungen 14, 15 auf, die sich jeweils um den Umfang der Schachtwand erstrecken, wobei eine obere Brennstoffringleitung 14 mit dem Brenner 10 der oberen Brennkammerebene 8 und eine untere Brennstoffringleitung 15 mit dem Brenner 10 der unteren Brennkammerebene 9 zur Zufuhr von Brennstoff verbunden ist. Die Brennstoffleitung 13 ist vorzugsweise jeweils mit jeder der Brennstoffringleitungen 14, 15 über ein Ventil verbunden, sodass die Brennstoffzufuhr geregelt zugeführt werden kann. Die Brennstoffringleitungen 14, 15 sind zumindest teilweise als Ringleitungen und beispielsweise teilweise als Zuleitung zu der Ringleitung ausgebildet.

Die Oxidationsmittelzuleitung 16 zweigt sich beispielhaft in zwei Oxidationsmittelringleitungen 17, 18 auf, die sich jeweils um den Umfang der Schachtwand erstrecken, wobei eine obere Oxidationsmittelringleitung 17 mit dem Brenner 10 der oberen Brennkammerebene 8 und eine untere Oxidationsmittelringleitung 18 mit dem Brenner 10 der unteren Brennkammerebene 9 zur Zufuhr von Oxidationsmittel verbunden ist. Die Oxidationsmittelzuleitungen 16 ist vorzugsweise jeweils mit jeder der Oxidationsmittelringleitungen 17, 18 über ein Ventil verbunden, sodass das Oxidationsmittel geregelt zugeführt werden kann. Die Oxidationsmittelringleitungen 17, 18 sind zumindest teilweise als Ringleitungen und beispielsweise teilweise als Zuleitung zu der Ringleitung ausgebildet. Bei dem Oxidationsmittel handelt es sich beispielsweise um Luft, mit Sauerstoff angereicherter Luft, reinem Sauerstoff oder einem Gas mit einem Sauerstoffanteil von etwa mindestens 90%.

Die Oxidationsmittelzuleitung 16 und die Brennstoffleitung 13 stehen beispielsweise jeweils mit einem Ventilator, vorzugsweise einem Verdichter, in Verbindung, sodass das Oxidationsmittel und/ oder der Brennstoff in Richtung der Brenner 10 beaufschlagt wird.

Am unteren Ende des Schachts 2 ist ein Materialauslass 40 zum Abführen des gebrannten Materials angeordnet. Bei dem Materialauslass handelt es sich beispielsweise um eine wie mit Bezug auf den Materialeinlass 3 beschriebene Schleuse. An die Kühlzone 22 schließt sich In Materialförderrichtung ein Auslasstrichter 25, insbesondere ein unterer Materialbunker, an, der in dem Materialauslass 40 zum Auslassen des Materials aus dem Schachtofen 1 mündet. In dem Auslasstrichter 25 ist beispielhaft eine Austragsvorrichtung 41 angeordnet, die dem Auslassen von Material aus der Kühlzone 22 des Schachtofens 1 in den Auslasstrichter 25 dient. Bei der Austragsvorrichtung 41 handelt es sich beispielsweise um einen Drehteller oder Schubtische.

Der Schachtofen 1 weist einen oder mehrere Kühllufteinlässe zum Einbringen von Kühlluft in den Schachtofen 1 auf. Beispielhaft ist in dem Schachtofen 1 der Fig. 1 ein Kühllufteinlass angeordnet, der Kühlluft in den Auslasstrichter 25 einleitet. Vorzugsweise wird die Kühlluft mit einem Druck von bis zu 500 mbar in den Auslasstrichter 25 mittels eines Kühlluftverdichters 26 eingeblasen.

Der Schacht 12 weist des Weiteren eine Kühlgasabzugseinrichtung 29 zum Abführen zumindest eines Teils der Kühlluft aus dem Schacht 2 auf. Die Kühlgasabzugseinrichtung 29 ist beispielsweise als konzentrisch zu dem Schacht 2 und innerhalb dessen angeordneter Innenzylinder ausgebildet. Die Kühlluft durchströmt den Schachtofen 1, insbesondere den Schacht 2, von unten nach oben in vertikaler Richtung und im Gegenstrom zu dem Material und verlässt den Schacht 2 durch die Abgasauslasssleitung 39 des Abgasauslasss 19 und/ oder durch die Kühlgasabzugseinrichtung 29. Die Kühlgasabzugseinrichtung 29 erstreckt sich beispielhaft mittig durch die Brennzone 20 des Schachts 2 hindurch. Vorzugsweise ist die Brennzone 20 des Schachts 2 zumindest teilweise oder vollständig als Ringraum ausgebildet, der konzentrisch zu der Kühlgasabzugseinrichtung 29 angeordnet ist. Optional erstreckt sich die Kühlgasabzugseinrichtung 29 von der Kühlzone 22 oder der Grenze zwischen der Brennzone 20 und der Kühlzone 22 durch die Brennzone 20 hindurch beispielsweise bis in die Vorwärmzone 21 und durch die Schachtwand aus dem Schacht 2 hinaus. Die Kühlgasabzugseinrichtung 29 ist mit einem Gasauslass 12 zum Auslassen der Kühlluft und beispielsweise Abgas aus dem Schacht 2. Das aus dem Gasauslass 12 austretende Gas strömt vorzugsweise in eine Kühlluftabzugsleitung 11. Die Kühlgasabzugseinrichtung 29 erstreckt sich durch den Schacht 2 beispielsweise bis zu dem Gasauslass oder über diesen hinaus. Der Gasauslass 12 ist vorzugsweise auf dem Höhenniveau der Brennzone 22 angeordnet.

Zur Kühlung der Kühlgasabzugseinrichtung 29 weist der Schacht 2 vorzugsweise einen Kühllufteinlass, durch welchen Kühlluft oberhalb der Austragsvorrichtung 41 mittels eines Kühlluftverdichters 27 in eine Kühlluftleitung 47 eingeleitet wird. Die Kühlluftleitung 47 erstreckt sich vorzugsweise entlang der Kühlgasabzugseinrichtung 29, insbesondere entlang der Außenwand der zylinderförmigen Kühlgasabzugseinrichtung 29 und mündet vorzugsweise in die Kühlluftabzugsleitung 11. Optional mündet die Kühlluftleitung 47 in die zur Kühlen des oberen Innenzylinders 6 angeordnete weitere Kühlluftleitung 7. Die Kühlluftleitungen 7, 47 sind vorzugsweise über eine Regeleirichtung, wie eine Klappe oder ein Ventil mit der Kühlluftabzugsleitung 11 zur geregelten Zufuhr von Kühlluft in die Kühlluftabzugsleitung 11 verbunden.

Die Kühlgasabzugseinrichtung 29 weist vorzugsweise einen kreisförmigen Querschnitt auf und ist nach oben geschlossen, sodass kein zu brennenden Material in die Kühlgasabzugseinrichtung 29 eintritt. Die Brennzone 20 weist insbesondere einen kreisringförmigen Querschnitt auf, wobei die Breite des Kreisrings etwa 0,5 bis 2m, vorzugsweise etwa 1 m beträgt.

Der Schachtofen 1 weist des Weiteren optional einen oberen Innenzylinder 6 auf, der sich zumindest teilweise durch die Vorwärmzone 21 erstreckt und oberhalb der Kühlgasabzugseinrichtung 29 angeordnet ist. Der obere Innenzylinder 6 weist einen Auslass zum Auslassen von Gas aus dem Schacht 2 auf, wobei dieser Auslass vorzugsweise verschlossen ist, sodass das in den oberen Innenzylinder 6 eintretende Gas nicht aus dem Schacht 2 austreten kann. Im Betrieb des Schachtofens 1 dient der obere Innenzylinder 6 einer Vergleichmäßigung des Materialflusses innerhalb der Vorwärmzone 21. Vorzugsweise ist in der Vorwärmzone 21 ein Kühllufteinlass zum Kühlen des oberen Innenzylinders 6 angeordnet. Durch den Kühllufteinlass strömt vorzugsweise mittels eines Ventilators 28 beschleunigte Kühlluft in eine um die Vorwärmzone 21 herum angeordnete Ringleitung und/ oder eine zumindest teilweise innerhalb des oberen Innenzylinders 6 angebrachte Kühlluftleitung 7.

Das Material strömt Im Betrieb des Schachtofens 1 im Wesentlichen schwerkraftbedingt durch den Schacht 2 und wird im Gegenstrom oder teilweise im Gleichstrom thermisch behandelt. Vorzugsweise bildet sich innerhalb der Brennzone 20 eine Gegenstrombrennzone 23 aus, in welcher das Material entgegen der Gasströmung durch den Schacht 2 strömt. Die Gegenstrombrennzone 23 bildet sich beispielhaft oberhalb der unteren Brennkammerebene 9 aus. Vorzugsweise bildet sich innerhalb der Brennzone 20 zusätzlich eine Gleichstrombrennzone 24 aus, in welcher die Gasströmung in gleicher Richtung zu der Materialströmung durch den Schacht 2 verläuft. Die Gleichstrombrennzone 24 ist beispielhaft unterhalb der unteren Brennkammerebene 9 ausgebildet. Die Anordnung der Gleichstrombrennzone 24 und der Gegenstrombrennzone kann je nach Fließgeschwindigkeit des Materials und der Gasströmung variieren, wobei die Gegenstrombrennzone 23 vorzugsweise immer oberhalb der Gleichstrombrennzone 24 ausgebildet ist.

Die Höhe des Schachts 2 ist vorzugsweise durch die verfahrensgemäß im Zusammenhang mit der Einstellung der Fördergeschwindigkeit mittels der Austragsvorrichtung 41 zu bestimmenden Verweilzeiten des Brennmaterials bestimmt. Diese Verweilzeiten verteilen sich auf die obere, sich an den Materialeinlass 3 anschließende Vorwärmzone 21, auf die nach unten folgende Brennzone 20 und die zumindest bis zur Austragsvorrichtung 41 verlaufende Kühlzone 22. Vorzugsweise wird in der Vorwärmzone 21 das Material bis auf eine Temperatur von bis zu ca. 800°C vorgewärmt, wobei die Brennzone 22 beispielsweise eine Temperatur von 800°C bis 1800°C aufweist und in der Kühlzone 22 das Material wieder bis auf ca. 100°C abgekühlt wird.

Im Betrieb des Schachtofens 1 bildet sich in der Brennzone 20 des Schachts 2 eine Materialsäule mit dem über die Materialaufgabe 3 zugeführten Gut aus, wobei das Gut durch Schwerkraft nach unten wandert und im Bereich der Kühlzone 22 über den Materialauslass 40 als kalziniertes Produkt, beispielweise Branntkalk, abgezogen wird. Das Gut füllt dabei die Brennzone 20 vorzugsweise über den gesamten vorzugsweise kreisringförmigen Querschnitt und die Kühlzone 22 aus. Die Kühlgasabzugseinrichtung 29 ist vorzugsweise materialfrei. Das Kühlgas durchströmt die Materialschüttung und gelangt in die Kühlgasabzugseinrichtung 29. Zumindest teilweise gelangt vorzugsweise zusätzlich zu dem Kühlgas Abgas aus der Brennzone 24 in die Kühlgasabzugseinrichtung 29.

Die Kühlgasabzugseinrichtung 29 ist über die Kühlluftabzugsleitung 11 mit einem Regelorgan 46 in Form von beispielsweise einer Klappe verbunden zur Regelung der Menge an Luft, die durch die Kühlgasabzugseinrichtung 29, insbesondere die sich daran anschließende Kühlluftabzugsleitung 11 strömt.

Der Abgasauslass 19 zum Abführen des Abgases aus der Vorwärmzone 21 ist vorzugsweise über die Abgasauslassleitung 39 mit einem Abgasfilter 31 zur Entstaubung des Abgases und optional mit einer Kühleinrichtung 32, insbesondere einem Wärmetauscher, zur Kühlung des heißen Abgases verbunden. Über die Abgasauslassleitung 39 wird zumindest teilweise oder vollständig das Abgas der Brennzone 20 aus dem Schacht 2 abgeführt. Das über den Abgasauslass 19 und die Abgasauslassleitung 39 aus dem Schacht 2 abgezogene Abgas wird insbesondere in dem Abgasfilter 31 entstaubt und dann beispielsweise zur weiteren Verarbeitung als entstaubtes Abgas mittels eines Ventilators 33 abgeführt. Optional kann stromabwärts des Abgasfilters 31 eine Kühlung des Abgases, insbesondere in einem Wärmetauscher mit einer Wasserkühlung, in einer Kühleinrichtung 32 erfolgen. Das vor oder nach der Kühleinrichtung 32 abgeführte Abgas weist einen hohen CO2-Anteil auf und kann beispielsweise einer Sequestrierung und/ oder einer weiteren industriellen Verwertung, wie beispielsweise der Herstellung von Soda oder gefälltem Calciumcarbonat, zugeführt werden.

Beispielsweise wird ein Teil des mittels der Abgasauslassleitung 39 abgeführten Abgases in die Brennzone 20 eingeführt, beispielsweise um der Brennzone 20 Wärme zuzuführen und die Verbrennungstemperatur einzustellen. Die Abgasauslassleitung 39 ist optional mit einer der Oxidationsmittelzuleitungen 16, insbesondere mit den Oxidationsmittelringleitungen 17, 18 verbunden, sodass Abgas in die Oxidationsmittelringleitungen 17, 18 strömt. Der Abgasauslass 19, vorzugsweise die Kühleinrichtung 32, ist beispielsweise über eine Regeleinrichtung 44, 45, wie beispielsweise eine Klappe oder ein Ventil, zur geregelten Zuführung des Abgases in die jeweilige Oxidationsmittelringleitung 17, 18 verbunden. Optional weist jede Oxidationsmittelringleitung 17, 18 jeweils einen Gasmischer 36 zur Mischung des Oxidationsmittels mit dem rezirkulierten Abgas auf.

Beispielhaft wird ein Teil des mittels der Kühleinrichtung 32 abgekühlten Abgases zusammen oder separat mit dem Oxidationsmittel der Brennzone 20 zugeführt. Zwischen der Kühleinrichtung 32 und den Oxidationsmittelringleitungen 17, 18 ist beispielsweise ein Wärmetauscher 35 angeordnet. Der rezirkulierte Teil des Abgases wird vorzugsweise in dem beispielsweise durch die abgezogen Kühlluft betriebenen Wärmetauscher 35 auf insbesondere 500° vorgewärmt. Damit die Wärmeübertragung in dem Wärmetauscher 35 nicht durch Ablagerungen vermindert wird, kann es zweckmäßig sein, dass das über die Kühlgasabzugseinrichtung 29 abgezogene Kühlgas, welches beispielsweise eine Temperatur von 900°C hat, zuvor auf unter 700°C, vorzugsweise unter 600°C, abzukühlen, wobei die Abkühlung beispielsweise durch Vermischung mit Luft oder in der Kühleinrichtung 35 erfolgen kann. Vorzugsweise ist ein Ventilator 34 oder Verdichter, insbesondere ein Hochdruckverdichter, Drehkolben- oder Schraubenverdichter, zum Beschleunigen des rezirkulierten Abgases in Richtung der Oxidationsmittelringleitungen 17, 18 vorgesehen. Es ist ebenfalls denkbar, dass das rezirkulierte Abgas ausschließlich einem Wärmetauscher, nämlich dem Wärmetauscher 35, vor dem Einleiten des Abgases in die Brennzone 20 zugeführt wird. Die als Wärmetauscher ausgebildete Kühleinrichtung 32 ist vorzugsweise in Strömungsrichtung des Abgases nach der Abzweigung des abzuführenden Abgases und beispielsweise vor dem Ventilator 33 angeordnet.

Die Kühlluftabzugsleitung 11 ist insbesondere mit dem Wärmetauscher 35 und im Anschluss daran optional mit einem Filter 50 verbunden, sodass die über die Kühlgasabzugseinrichtung abgezogene Kühlluft gekühlt und entstaubt wird. Zur weiteren Kühlung der abgezogenen Kühlluft wird optional ein Kühlmittel, wie Luft mit der abgezogenen Kühlluft vermischt, vorzugsweise vor dem Eintritt in den Wärmetauscher 35. In Strömungsrichtung der abgezogenen Kühlluft ist optional vor dem Regelorgan 46 ein Filter zur Staubabscheidung angeordnet. In der Kühlgasabzugsleitung sind somit nacheinander der Wärmetauscher 35, das Regelorgan 46 und optional ein Filter 50 vor oder nach dem Regelorgan 46 angeordnet. Es ist ebenfalls denkbar, die Kühlabluft nicht durch einen Wärmetauscher 35 zu leiten, sondern beispielsweise zur Erzeugung von Strom, Trocknung von Mahlgut oder zu Heizzwecken zu verwenden.

Das Regelorgan 46 steht ferner mit einer in Fig. 1 nicht dargestellten Steuereinrichtung in Verbindung, die mit einem oder mehreren Sensoren verbunden ist. Der Schachtofen 1 weist zumindest einen Sensor auf, der zur Messung der Druckdifferenz zwischen der Brennzone 20 und der Kühlgasabzugseinrichtung 29 ausgebildet und eingerichtet ist. Des Weiteren können Sensoren zur Messung des Sauerstoffgehaltes und/oder des CO2-Gehaltes in der Kühlluftabzugsleitung 11 und/ oder Abgasauslassleitung 39 angeordnet sein.

Die Messwerte geben Aufschluss darüber, welche Menge des über die Kühllufteinlässe der Kühlzone 22 zugeführten Kühlgases über die Kühlgasabzugseinrichtung 29 abgeführt wird. Die Menge lässt sich dabei über das Regelorgan 46 einstellen. Das Kühlgas wird immer den Weg des geringsten Widerstandes wählen. So lässt sich beispielsweise bei einer bestimmten Stellung des Regelorgans 46 erreichen, dass der Kühlgasabzug so eingestellt ist, dass das Kühlgas weder in die Brennzone 20 noch das Abgas der Brennzone 20 in die Kühlzone 22 strömt. In dieser Situation würde sich an dem Sensor eine Druckdifferenz von Null bzw. nahe Null einstellen. Eine entsprechende Überprüfung lässt sich aber beispielsweise auch durch den Sauerstoffgehalt und/ oder CO2-Gehalt des abgeleiteten Kühlgases oder des Abgases durchführen. Würde man das Regelorgan 46 im Sinne einer weiteren Öffnung verstellen, würde allmählich ein Teil des Abgases aus der Brennzone 20 in die Kühlzone 22 und von dort über die Kühlgasabzugseinrichtung 29 abgeleitet werden. Entsprechend wird bei einem weiteren Verschließen des Regelorgans 46 ein Teil der Kühlluft in die Brennzone 20 überströmen, sodass nur ein Teilabzug des Kühlgases über die Kühlgasabzugseinrichtung 29 erfolgt.

Das durch eine Absperrklappe gebildete Regelorgan 46 ermöglicht somit eine sehr einfache, effiziente und kostengünstige Beeinflussung des Kühlgasabzuges. Dennoch können beispielsweise die beiden Atmosphären in der Brennzone 20 und in der Kühlzone 22 voneinander getrennt werden, ohne dass eine aufwendige Schleusenanordnung erforderlich ist.

Die Stellung des Regelorgans 46 hängt in erster Linie von der gewünschten Anwendung, insbesondere von der gewünschten Zusammensetzung des Abgases oder der Beschaffenheit des gebrannten Materials ab. Beispielsweise wird zur Erzeugung von mittelhartem und hart gebrannten Kalk mit verminderter Reaktivität, die Stellung des Regelorgans derart eingestellt, dass kein Abgas aus der Brennzone 20 in die Kühlgasabzugseinrichtung 29, insbesondere in die Kühlzone 22, gelangt. Das gesamte innerhalb der Brennzone 20 entstehende Abgas wird vorzugsweise aus der Abgasauslassleitung 39 aus dem Schacht 2 ausgelassen. Vorzugsweise wird das Regelorgan 46 derart eingestellt, dass weder Abgas aus der Brennzone 20 in die Kühlzone 22 noch Kühlluft aus der Kühlzone 22 in die Brennzone 20 gelangt.

Zur Erzeugung von weich gebranntem Kalk mit hoher Reaktivität, wird die Stellung des Regelorgans derart eingestellt, dass ein Teil des Abgases der Brennzone 20 in die Kühlzone 22 strömt und vorzugsweise über die Kühlgasabzugseinrichtung 29 aus dem Schacht 2 ausgelassen wird. Vorzugsweise gelangt in dieser Stellung des Regelorgans 46 keine Kühlluft aus der Kühlzone 22 in die Brennzone 20.

Will man beispielsweise ein Abgas mit einem hohen CO2-Anteil von beispielsweise 90% Vol.-% bezogen auf ein trockenes Abgas erhalten, muss durch das Regelorgan 46 sichergestellt werden, dass kein Kühlgas in die Brennzone 20 gelangt. Außerdem wird man vorzugsweise ein Oxidationsmittel mit einem sehr hohen Sauerstoffgehalt von wenigstens 90%, vorzugsweise mehr als 90% Vol.-%, wählen. Das sich dabei ergebende Abgas eignet sich insbesondere für eine nachfolgende Sequestrierung.

Im Rahmen der Erfindung ist es auch denkbar, dass der oben beschriebene Schachtofen 1 bzw. das zugehörige Verfahren zur Herstellung eines Abgases genutzt wird, welches in der Sodaindustrie benötigt wird. Hierzu sollte das Abgas einen CO2-Gehalt von etwa 40 bis 42% und einen Sauerstoffgehalt von unter 2% aufweisen. Um ein solches Abgas zu erhalten, muss das Regelorgan so eingestellt werden, dass lediglich eine Teilmenge des Kühlgases über die Kühlgasabzugsleitung abgezogen wird, während der andere Teil in den Brennschacht gelangt.

Eine weitere Anwendungsmöglichkeit stellt die Herstellung von gefälltem Calciumcarbonat dar. Durch die spezielle Konstruktion der im Überdruck betriebenen Vorrichtung, mit einer materialfreien, gasgefüllten Kühlgasabzugseinrichtung in der Kühl- und Brennzone 20, 22 in Kombination mit dem Regelorgan 46 ergibt sich ein Schachtofen 10 zum Brennen und/oder Kalzinieren von stückigem Gut, der sich durch eine besonders einfache und kostengünstige Möglichkeit zur Beeinflussung der Zusammensetzung des Abgases bzw. der Atmosphären in der Brennzone 26 und der Kühlzone 28 auszeichnet.

Fig. 2 bis 5 sind Querschnitte durch den Schachtofen 1 der Fig. 1 an unterschiedlichen Ebenen. Fig. 2 und 3 zeigen die Brennkammerebenen 8, 9 in einer Querschnittdarstellung, wobei beispielsweise Fig. 2 die obere Brennkammerebene 8 und Fig. 3 die untere Brennkammerebene 9 darstellt. Jede Brennkammerebene 8, 9 weist beispielhaft vier Brennkammern 4, 5 auf, die vorzugsweise sternförmig in dem Brennraum 20 angeordnet und gleichmäßig zueinander beabstandet sind. Es ist ebenfalls denkbar, dass eine oder mehrere Brennkammerebenen 8, 9 mehr oder weniger als vier Brennkammern 4, 5 aufweisen. Die Brennkammern 4, 5 der Brennkammerebenen 8, 9 sind beispielhaft in einem Winkel von etwa 45° versetzt zueinander angeordnet. Davon abweichende Anordnungen sind ebenfalls denkbar. Die Brennkammern 4, 5 sind vorzugsweise durch seitliche Querwände abgegrenzt und nach unten und oben in Richtung des Schachtes 2 geöffnet, sodass das in der Brennkammer 4, 5 erwärmte Gas in die Brennzone 20 strömt. Zwischen benachbarten Brennkammern 4, 5 sind jeweils Durchlässe angeordnet, sodass das Material und das Gas entlang des Schachtes 2 strömen können.

Fig. 4 und 5 zeigen jeweils ein Ausführungsbeispiel eines Querschnitts durch die Ebene des Gasauslasses 12 der Kühlgasabzugseinrichtung 29. In Fig. 4 weist die Kühlgasabzugseinrichtung 29 beispielhaft lediglich einen Gasauslass 12 auf, der sich von der Kühlgasabzugseinrichtung 29 nach außen aus dem Schacht 2 hinaus erstreckt. Das Ausführungsbeispiel der Fig. 5 weist beispielhaft vier Gasauslässe 12 auf, die sich sternförmig zueinander von der Kühlgasabzugseinrichtung 29 radial nach außen erstrecken und vorzugsweise gleichmäßig zueinander beabstandet sind. Die Anzahl der Gasauslässe 12 beträgt beispielsweise eins bis zehn. Die Gasauslässe 12 sind vorzugsweise jeweils mit einem jeweiligen Wärmetauscher 35 verbunden, sodass der Schachtofen 1 beispielhaft vier Wärmetauscher 35 aufweist. Es ist ebenfalls denkbar, dass der Schachtofen 1 lediglich einen, zwei oder drei Wärmetauscher 35 aufweist, die mit den Gasauslässen 12 verbunden sind. Vorzugsweise entspricht die Anzahl der Gasauslässe 12 der Anzahl der Wärmetauscher 35.

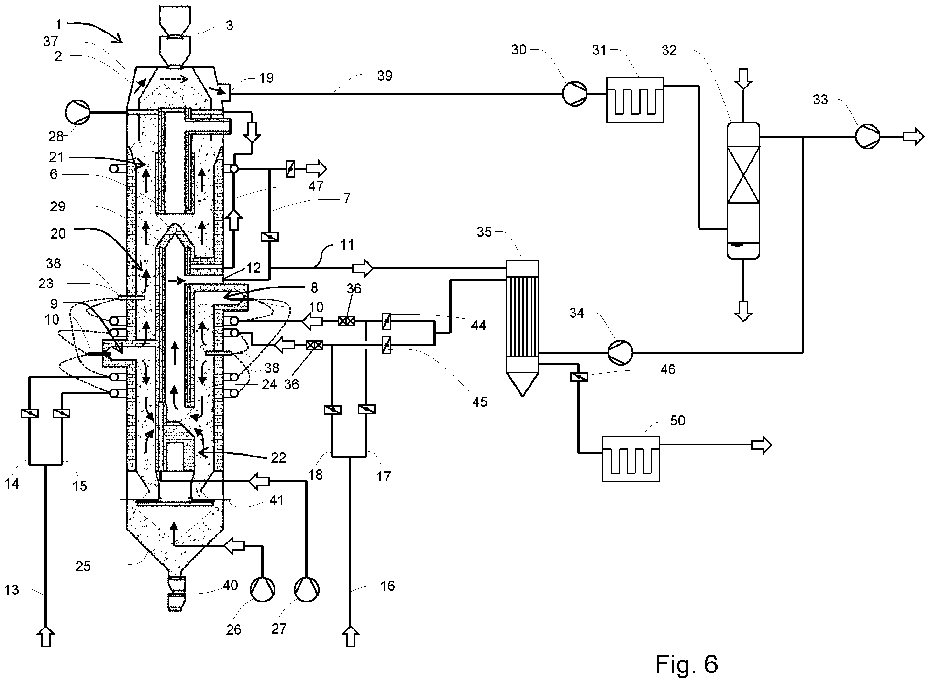

In Fig. 6 ist ein weiteres Ausführungsbeispiel eines Schachtofens 1 gezeigt, wobei der Schachtofen 1 dem in Fig. 1 gezeigten Schachtofen 1 entspricht mit dem Unterschied, dass der Schachtofen 1 der Fig. 6 eine Mehrzahl von zusätzlichen Brennern, insbesondere Seitenbrennern 38 aufweist. Beispielhaft sind in jeder Brennkammerebene 8, 9 zusätzlich zu den in den Brennkammern 4, 5 angeordneten Brennern 10, eine Mehrzahl von Seitenbrennern 38 angebracht. Die Seitenbrenner 38 sind jeweils mit der Brennstoffleitung über die jeweilige Brennstoffringleitung 14, 15 und mit der Oxidationsmittelzuleitung 16 über die jeweilige Oxidationsmittelringleitung 17, 18 verbunden.

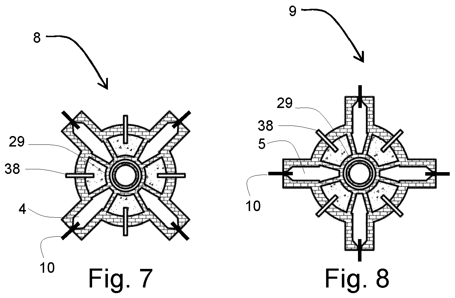

Fig. 7 und 8 zeigt jeweils eine Brennkammerebene 8, 9 des Schachtofens der Fig. 3 in einer Querschnittsansicht. Die Seitenbrenner 38 der jeweiligen Brennkammerebenen 8, 9 sind jeweils zwischen benachbarten Brennkammern 4, 5 angeordnet und vorzugsweise gleichmäßig zueinander beabstandet. Es ist ebenfalls denkbar, dass die Seitenbrenner 38 oberhalb oder unterhalb der Brennkammerebenen 8, 9 angebracht sind. Bei den Seitenbrennern 38 handelt es sich beispielsweise um Brennerlanzen, die sich durch die Schachtwand in die Brennzone erstrecken.

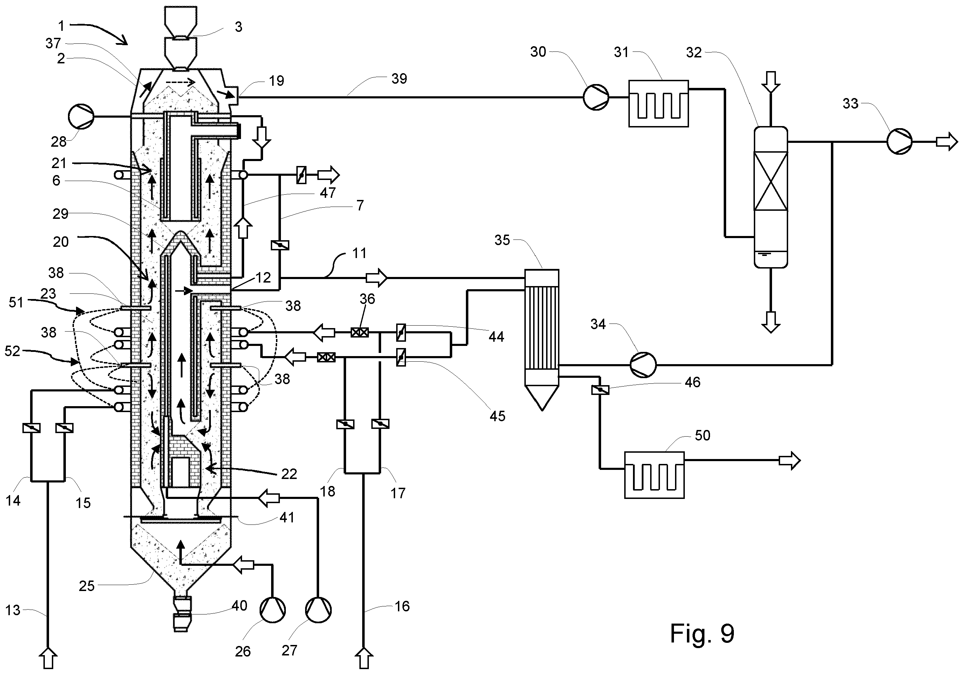

In Fig. 9 ist ein weiteres Ausführungsbeispiel eines Schachtofens 1 gezeigt, wobei der Schachtofen 1 dem in Fig. 1 gezeigten Schachtofen 1 entspricht mit dem Unterschied, dass der Schachtofen 1 der Fig. 9 keine Brennkammern aufweist. Der Schachtofen 1 der Fig. 9 weist lediglich eine Mehrzahl von Seitenbrennern 38 auf, die beispielhaft in zwei Brennerebenen 51, 52 in der Brennzone 20 angebracht sind. Beispielsweise sind die Brennerlanzen 38 derart in der Schachtwand angebracht, dass die Einstecktiefe in den Schacht 2 variabel ist. Vorzugsweise sind die Seitenbrenner 38 in der Schachtwand radial verschiebbar angebracht. Die Seitenbrenner 38 einer Brennerebene 51, 52 weisen beispielsweise die gleiche Einstecktiefe auf. Vorzugsweise weisen die Seitenbrenner der ersten, oberen Brennerebene 51 eine erste Einstecktiefe und die Seitenbrenner 38 der zweiten, unteren Brennerebene 52 eine zweite Einstecktiefe auf.

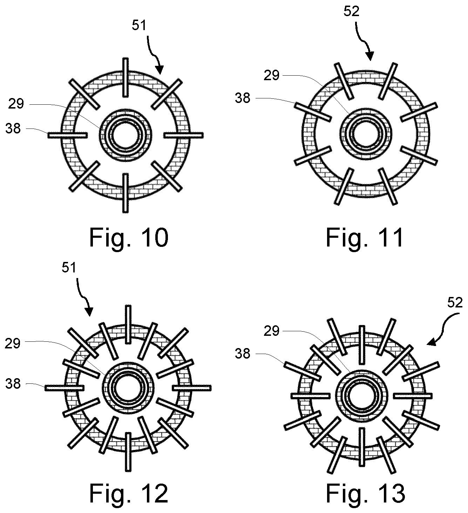

Fig. 10 bis 13 zeigen jeweils eine Brennerebene 51, 52 des Schachtofens 1 der Fig. 9 in einer Querschnittsansicht. Beispielhaft weisen die Brennerebenen 51, 52 jeweils die gleiche Anzahl an Seitenbrennern 38, wobei es ebenfalls denkbar ist, dass die Brennerebenen 51, 52 unterschiedliche Anzahl von Seitenbrennern 38 aufweisen. Die Brennerebenen 51, 52 sind beispielhaft in einem Winkel von etwa 22.5° zueinander verdreht angeordnet. Die Brennerebenen 51, 52 der Fig. 12 und 13 weisen Seitenbrenner 38 unterschiedlicher Einstecktiefen auf, wobei beispielhaft jeder zweite Seitenbrenner 38 eine erste Einstecktiefe und die zwischen diesen angeordnete Seitenbrenner 38 eine zweite Einstecktiefe aufweisen. Dies ermöglichte ein über den Querschnitt des Schachts 2, insbesondere der Brennzone 20, gleichmäßiges Brennen des Materials.

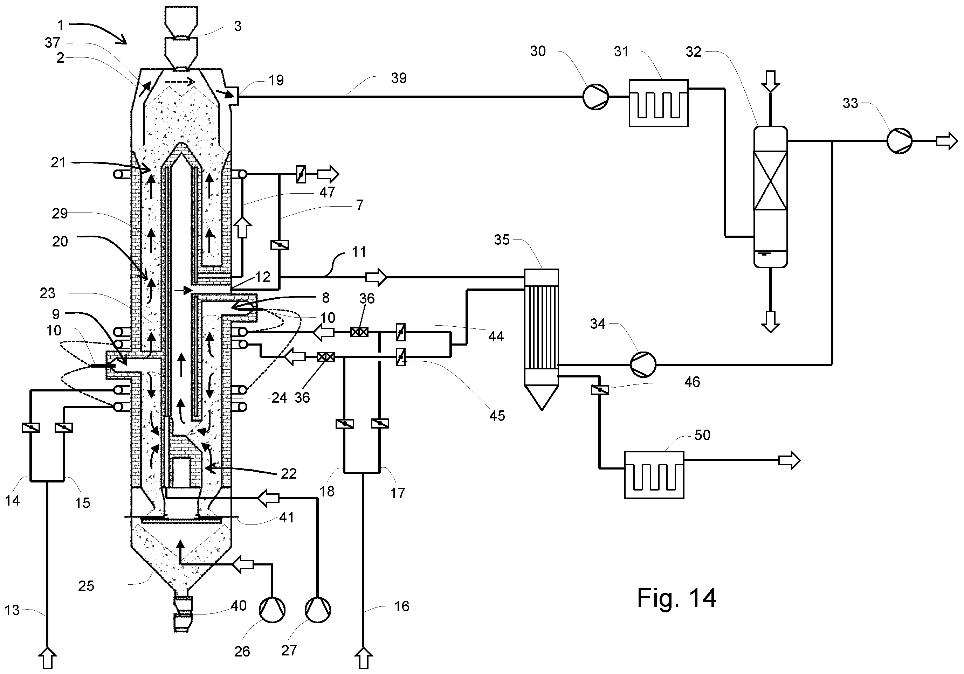

In Fig. 14 ist ein weiteres Ausführungsbeispiel eines Schachtofens 1 gezeigt, wobei der Schachtofen 1 dem in Fig. 1 gezeigten Schachtofen 1 entspricht mit dem Unterschied, dass der Schachtofen 1 der Fig. 14 keinen oberen Innenzylinder aufweist und die Kühlgasabzugseinrichtung 29 einen Bereich aufweist, der sich in der Höhe über den Gasauslass 12 hinweg in die Vorwärmzone 21 hinein erstreckt, sodass abgezogenes Kühlgas innerhalb der Kühlgasabzugseinrichtung 29 bis auf die Höhe der Vorwärmzone 21 strömt. Diese in der Höhe verlängerte Kühlgasabzugseinrichtung 29 dient der Vergleichmäßigung des Materialflusses in der Vorwärmzone 21 und beim Eintritt in die Brennzone 20.

### Bezugszeichenliste

- 1: Schachtofen
- 2: Schacht
- 3: Materialeinlass/ Schleuse
- 4: Brennkammer der oberen Brennkammerebene
- 5: Brennkammer der unteren Brennkammerebene
- 6: oberer Innenzylinder
- 7: Kühlluftleitung
- 8: obere Brennkammerebene
- 9: untere Brennkammerebene
- 10: Brenner
- 11: Kühlluftabzugsleitung
- 12: Gasauslass
- 13: Brennstoffleitungen
- 14: obere Brennstoffringleitung
- 15: untere Brennstoffringleitung
- 16: Oxidationsmittelzuleitungen
- 17: obere Oxidationsmittelringleitung
- 18: untere Oxidationsmittelringleitung
- 19: Abgasauslass
- 20: Brennzone
- 21: Vorwärmzone
- 22: Kühlzone
- 23: Gegenstrombrennzone
- 24: Gleichstrombrennzone
- 25: Auslasstrichter
- 26: Kühlluftverdichter
- 27: Kühlluftverdichter
- 28: Verdichter / Ventilator
- 29: Kühlgasabzugseinrichtung
- 30: Verdichter / Ventilator
- 31: Abgasfilter
- 32: Kühleinrichtung
- 33: Verdichter / Ventilator
- 34: Verdichter / Ventilator
- 35: Wärmetauscher
- 36: Gasmischer
- 37: Ringspalt
- 38: Seitenbrenner
- 39: Abgasauslassleitung
- 40: Materialauslass/ Schleuse
- 41: Austragsvorrichtung
- 44: Regeleinrichtung
- 45: Regeleinrichtung
- 46: Regelorgan
- 47: Kühlluftleitung
- 50: Filter
- 51/ 52: erste Brennerebene /zweite Brennerebene

## Patentansprüche

1. Verfahren zum Brennen von insbesondere karbonathaltigem Material in einem Schachtofen (1) mit einem Schacht (2), wobei das Material durch einen Materialeinlass (3) in eine Vorwärmzone (21) zum Vorwärmen des Materials, eine Brennzone (20) zum Brennen des Materials und eine Kühlzone (22) zum Kühlen des gebrannten Materials zu einem Materialauslass (40) strömt,
wobei Kühlluft in die Kühlzone (22) eingelassen wird,
wobei das Abgas über einen Abgasauslass (19) aus dem Schacht (2) ausgelassen wird und wobei
das über den Abgasauslass (19) aus dem Schacht (2) ausgelassene Abgas zumindest teilweise in die Brennzone (20) geleitet wird,
**dadurch gekennzeichnet, dass**
Kühlluft über eine Kühlgasabzugseinrichtung (29) aus dem Schacht (2) ausgelassen wird, die sich von der Kühlzone (22) in die Brennzone (20) und von der Brennzone (20) aus dem Schacht (2) heraus erstreckt.

2. Verfahren nach Anspruch 1, wobei das Abgas vor dem Einleiten in die Brennzone (20) einem Wärmetauscher (32, 35) zugeführt wird.

3. Verfahren nach einem der vorangehenden Ansprüche, wobei innerhalb der Brennzone (20) eine Gleichstrombrennzone (24) ausgebildet wird.

4. Verfahren nach einem der vorangehenden Ansprüche, wobei innerhalb des Schachtofens (1) ein Überdruck eingestellt wird.

5. Verfahren nach einem der vorangehenden Ansprüche, wobei ein Oxidationsmittel, insbesondere sauerstoffreiches Gas, in die Brennzone (20) geleitet wird.

6. Verfahren nach Anspruch 5 wobei das Oxidationsmittel vor dem Eintreten in die Brennzone (20) mit dem Abgas gemischt wird.

7. Schachtofen (1) zum Brennen von insbesondere karbonathaltigem Material mit einem Schacht (2) aufweisend in Strömungsrichtung des Materials
einen Materialeinlass (3),
eine Vorwärmzone (21) zum Vorwärmen des Materials, eine Brennzone (20) zum Brennen des Materials,
eine Kühlzone (22) zum Kühlen des gebrannten Materials,
und einen Materialauslass (40) zum Auslassen des Materials aus dem Schachtofen (1),
wobei der Schachtofen (1) einen Abgasauslass (19) zum Auslassen von Abgas aus dem Schacht (2) aufweist, und
wobei der Abgasauslass (19) zur Rückführung des Abgases mit der Brennzone (20) verbunden ist **dadurch gekennzeichnet, dass** der Schachtofen (1) eine Kühlgasabzugseinrichtung (29) zum Auslassen von Kühlluft aus dem Schacht (2) aufweist, die sich von der Kühlzone (22) in die Brennzone (20) und von der Brennzone (20) aus dem Schacht (2) heraus erstreckt.

8. Schachtofen (1) nach Anspruch 7, wobei zwischen dem Abgasauslass (19) und der Brennzone (20) ein Wärmetauscher (32, 35) angeordnet ist.

9. Schachtofen (1) nach einem der vorangehenden Ansprüche, wobei innerhalb der Brennzone (20) eine Gleichstrombrennzone (24) ausgebildet ist.

10. Schachtofen (1) nach einem der vorangehenden Ansprüche, wobei innerhalb der Kühlzone (22) ein Kühllufteinlass zum Einlassen von Kühlluft in die Kühlzone (22) angeordnet ist und wobei der Kühllufteinlass mit einem Verdichter (26) zur Erzeugung eines Überdrucks in dem Schachtofen (1) verbunden ist.

11. Schachtofen (1) nach einem der vorangehenden Ansprüche, wobei der Materialeinlass (3) und/ oder der Materialauslass (40) eine Schleuse zum Einlassen und/ oder Auslassen von Material in den Schachtofen (1) aufweist.

12. Schachtofen (1) nach einem der vorangehenden Ansprüche, wobei der Schachtofen (1) eine Oxidationsmittelzuleitung (16) zur Leitung von Oxidationsmittel, insbesondere sauerstoffreichem Gas, in die Brennzone (20) aufweist.

13. Schachtofen (1) nach Anspruch 12, wobei der Abgasauslass (19) mit der Oxidationsmittelzuleitung (16) zur Leitung des Abgases über die Oxidationsmittelzuleitung (16) in die Brennzone (20) verbunden ist.

14. Schachtofen (1) nach einem der vorangehenden Ansprüche, wobei die Kühlgasabzugseinrichtung (29) eine Mehrzahl von Gasauslässen (12) zum Auslassen des aus dem Schacht (2) abgezogenen Gases aus dem Schacht (2) aufweist.

15. Schachtofen (1) nach Anspruch 14, wobei die Anzahl der Wärmetauscher (35) stromabwärts der Kühlgasabzugseinrichtung (29) der Anzahl der Gasauslässe (12) entspricht.

16. Schachtofen (1) nach einem der vorangehenden Ansprüche, wobei in der Brennzone (20) zumindest eine Brennkammerebene (8, 9) ausgebildet ist, in der zumindest eine Brennkammer (4, 5) mit einem Brenner (10) angeordnet ist und wobei in der Brennzone (20) zumindest ein zusätzlicher Brenner (38) angeordnet ist.

## Claims

1. Process for burning material, in particular material containing carbonate, in a shaft furnace (1) with a shaft (2), wherein the material flows through a material inlet (3) into a preheating zone (21) for preheating the material, a burning zone (20) for burning the material and a cooling zone (22) for cooling the burned material to a material outlet (40),
wherein cooling air is introduced into the cooling zone (22),
wherein the exhaust gas is discharged from the shaft (2) via an exhaust gas outlet (19), and wherein
the exhaust gas discharged from the shaft (2) via the exhaust gas outlet (19) is at least partially conducted into the burning zone (20),
**characterised in that**
cooling air is discharged from the shaft (2) via a cooling gas discharge device (29) which extends from the cooling zone (22) into the burning zone (20) and from the burning zone (20) out of the shaft (2).

2. Method according to claim 1, wherein the exhaust gas is fed to a heat exchanger (32, 35) before being introduced into the burning zone (20).

3. Method according to one of the preceding claims, wherein a co-current burning zone (24) is formed within the burning zone (20).

4. Method according to one of the preceding claims, wherein an overpressure is set within the shaft furnace (1).

5. Method according to one of the preceding claims, wherein an oxidising agent, in particular oxygen-rich gas, is fed into the burning zone (20).

6. Process according to claim 5, wherein the oxidising agent is mixed with the exhaust gas before entering the burning zone (20).

7. Shaft furnace (1) for burning material, in particular material containing carbonate, with a shaft (2) having, in the direction of flow of the material
a material inlet (3),
a preheating zone (21) for preheating the material, a burning zone (20) for burning the material,
a cooling zone (22) for cooling the burned material,
and a material outlet (40) for discharging the material from the shaft furnace (1),
wherein the shaft kiln (1) has an exhaust gas outlet (19) for discharging exhaust gas from the shaft (2), and
wherein the exhaust gas outlet (19) is connected to the burning zone (20) for returning the exhaust gas, **characterised in that** the shaft furnace (1) has a cooling gas discharge device (29) for discharging cooling air from the shaft (2), which extends from the cooling zone (22) into the burning zone (20) and from the burning zone (20) out of the shaft (2).

8. Shaft furnace (1) according to claim 7, wherein a heat exchanger (32, 35) is arranged between the exhaust gas outlet (19) and the burning zone (20).

9. Shaft furnace (1) according to one of the preceding claims, wherein a co-current burning zone (24) is formed within the burning zone (20).

10. Shaft furnace (1) according to one of the preceding claims, wherein a cooling air inlet is arranged within the cooling zone (22) for admitting cooling air into the cooling zone (22) and wherein the cooling air inlet is connected to a compressor (26) for generating an overpressure in the shaft furnace (1).

11. Shaft furnace (1) according to one of the preceding claims, wherein the material inlet (3) and/or the material outlet (40) comprises a sluice for admitting and/or discharging material into the shaft furnace (1).

12. Shaft furnace (1) according to one of the preceding claims, wherein the shaft furnace (1) comprises an oxidising agent supply line (16) for conducting oxidising agent, in particular oxygen-rich gas, into the firing zone (20).

13. Shaft furnace (1) according to claim 12, wherein the exhaust gas outlet (19) is connected to the oxidising agent supply line (16) for conducting the exhaust gas via the oxidising agent supply line (16) into the burning zone (20).

14. Shaft furnace (1) according to one of the preceding claims, wherein the cooling gas extraction device (29) comprises a plurality of gas outlets (12) for discharging the gas extracted from the shaft (2) from the shaft (2).

15. Shaft furnace (1) according to claim 14, wherein the number of heat exchangers (35) downstream of the cooling gas extraction device (29) corresponds to the number of gas outlets (12).

16. Shaft furnace (1) according to one of the preceding claims, wherein at least one combustion chamber plane (8, 9) is formed in the burning zone (20), in which at least one combustion chamber (4, 5) with a burner (10) is arranged and wherein at least one additional burner (38) is arranged in the burning zone (20).

## Revendications

1. Procédé de combustion d'un matériau, en particulier d'un matériau contenant du carbonate, dans un four à cuve (1) avec une cuve (2), dans lequel le matériau passe par une entrée de matériau (3) dans une zone de préchauffage (21) pour préchauffer le matériau, une zone de combustion (20) pour brûler le matériau et une zone de refroidissement (22) pour refroidir le matériau brûlé jusqu'à une sortie de matériau (40),
dans laquelle de l'air de refroidissement est introduit dans la zone de refroidissement (22),
le gaz d'échappement est évacué de l'arbre (2) par une sortie de gaz d'échappement (19), et dans lequel
le gaz d'échappement évacué de l'arbre (2) par la sortie de gaz d'échappement (19) est au moins partiellement conduit dans la zone de combustion (20),
**caractérisé par le fait que**
l'air de refroidissement est évacué de l'arbre (2) par un dispositif d'évacuation des gaz de refroidissement (29) qui s'étend de la zone de refroidissement (22) à la zone de combustion (20) et de la zone de combustion (20) à l'extérieur de l'arbre (2).

2. Procédé selon la revendication 1, dans lequel les gaz d'échappement sont acheminés vers un échangeur de chaleur (52, 55) avant d'être introduits dans la zone de combustion (20).

3. Procédé selon l'une des revendications précédentes, dans lequel une zone de combustion à co-courant (24) est formée à l'intérieur de la zone de combustion (20).

4. Procédé selon l'une des revendications précédentes, dans lequel une surpression est établie dans le four à cuve (1).

5. Procédé selon l'une des revendications précédentes, dans lequel un agent oxydant, en particulier un gaz riche en oxygène, est introduit dans la zone de combustion (20).

6. Procédé selon la revendication 5, dans lequel l'agent oxydant est mélangé au gaz d'échappement avant d'entrer dans la zone de combustion (20).

7. Four à cuve (1) pour la combustion de matières, en particulier de matières contenant du carbonate, avec une cuve (2) ayant, dans le sens de l'écoulement des matières
une entrée de matière (3)
une zone de préchauffage (21) pour préchauffer la matière, une zone de combustion (20) pour brûler la matière,
une zone de refroidissement (22) pour refroidir la matière brûlée,
et une sortie de matériau (40) pour décharger le matériau du four à cuve (1),
dans lequel le four à cuve (1) possède une sortie de gaz d'échappement (19) pour évacuer les gaz d'échappement de la cuve (2), et
dans lequel la sortie des gaz d'échappement (19) est reliée à la zone de combustion (20) pour renvoyer les gaz d'échappement, **caractérisé par le fait que** le four à cuve (1) possède un dispositif d'évacuation des gaz de refroidissement (29) pour évacuer l'air de refroidissement de la cuve (2), qui s'étend de la zone de refroidissement (22) à la zone de combustion (20) et de la zone de combustion (20) à l'extérieur de la cuve (2).

8. Four à arbre (1) selon la revendication 7, dans lequel un échangeur de chaleur (32, 35) est disposé entre la sortie des gaz d'échappement (19) et la zone de combustion (20).

9. Four à cuve (1) selon l'une des revendications précédentes, dans lequel une zone de combustion à co-courant (24) est formée à l'intérieur de la zone de combustion (20).

10. Four à arbre (1) selon l'une des revendications précédentes, dans lequel une entrée d'air de refroidissement est disposée dans la zone de refroidissement (22) pour admettre de l'air de refroidissement dans la zone de refroidissement (22) et dans lequel l'entrée d'air de refroidissement est connectée à un compresseur (26) pour générer une surpression dans le four à arbre (1).

11. Four à cuve (1) selon l'une des revendications précédentes, dans lequel l'entrée de matière (3) et/ou la sortie de matière (40) comprend un sas pour admettre et/ou décharger la matière dans le four à cuve (1).

12. Four à cuve (1) selon l'une des revendications précédentes, dans lequel le four à cuve (1) comprend une conduite d'alimentation en agent oxydant (16) pour conduire l'agent oxydant, en particulier le gaz riche en oxygène, dans la zone de cuisson (20).

13. Four à cuve (1) selon la revendication 12, dans lequel la sortie de gaz d'échappement (19) est reliée à la conduite d'alimentation en agent oxydant (16) pour conduire le gaz d'échappement via la conduite d'alimentation en agent oxydant (16) dans la zone de combustion (20).

14. Four à arbre (1) selon l'une des revendications précédentes, dans lequel le dispositif d'extraction du gaz de refroidissement (29) comprend une pluralité de sorties de gaz (12) pour évacuer le gaz extrait de l'arbre (2) de l'arbre (2).

15. Four à cuve (1) selon la revendication 14, dans lequel le nombre d'échangeurs de chaleur (35) en aval du dispositif d'extraction de gaz de refroidissement (29) correspond au nombre de sorties de gaz (12).

16. Four à cuve (1) selon l'une des revendications précédentes, dans lequel au moins un plan de chambre de combustion (8, 9) est formé dans la zone de combustion (20), dans lequel au moins une chambre de combustion (4, 5) avec un brûleur (10) est disposée et dans lequel au moins un brûleur supplémentaire (38) est disposé dans la zone de combustion (20).
